# EUROPÄISCHE PATENTSCHRIFT

(11) **EP 2 394 937 B1**
(45) Veröffentlichungstag und Bekanntmachung des Hinweises auf die Patenterteilung: **31.07.2013**
(21) Anmeldenummer: 11164302.9
(22) Anmeldetag: 29.04.2011
(51) Int. Cl.: B65G 47/90, B25J 9/10

(54) **Handhabungseinheit zum Umsetzen von Teilen und Verfahren hierfür**
Handling unit for converting parts and method for same
Unité de manipulation destinée à déplacer des pièces et procédé associé

(30) Priorität: 08.06.2010 DE 102010029809
(43) Veröffentlichungstag der Anmeldung: 14.12.2011
(73) Patentinhaber: Schunk GmbH & Co. KG Spann- und Greiftechnik, 74348 Lauffen am Neckar (DE)
(72) Erfinder: Geith, Georg, 82418 Murnau (DE)
(74) Vertreter: Dreiss

(56) Entgegenhaltungen:
- EP-A1- 1 538 117
- EP-A1- 1 710 448
- DE-A1- 2 201 955
- DE-A1- 3 603 650
- DE-A1-102006 014 973
- DE-U- 1 899 385
- US-A1- 2001 051 092

## Beschreibung

Die Erfindung betrifft eine Handhabungseinheit und ein entsprechendes Verfahren zum Umsetzen von Teilen mit einem Grundteil und einem Handhabungsarm, wobei der Handhabungsarm entlang einer ersten Bewegungsachse in linearer Richtung und entlang einer zur ersten Bewegungsachse quer verlaufenden zweiten Bewegungsachse gegenüber einem Grundteil verstellbar geführt ist, und wobei zur Führung des Handhabungsarm am Grundteil eine Führungskulisse und am Handhabrungsarm wenigstens un Kulissenfolger vorgeselen sind.

Derartige Handhabungseinheiten sind aus dem bekannten Stand der Technik beispielsweise aus der DE 20 2005 005 507 U1 oder der DE 200 047 46 U1 vorbekannt. Am freien Ende des Handhabungsarms können insbesondere Greifvorrichtungen angebracht sein, um Teile zu greifen und von einer Position in eine andere Position umzusetzen.

Aus der DE 36 03 650 A1 ist eine Positioniereinrichtung nach dem Oberbegriff des Anspruchs 1 bekannt.

Der Erfindung liegt die Aufgabe zugrunde, bekannte Handhabungseinheiten dahingehend zu verbessern, dass insbesondere der Umpositioniervorgang flexibler erfolgen kann.

Diese Aufgabe wird durch eine Handhabungseinheit mit den Merkmalen des Anspruchs 1 gelöst. Eine solche Handhabungseinheit sieht folglich vor, dass ein erster Antrieb zum Verstellen des Handhabungsarms entlang der ersten Bewegungsachse und ein zweiter Antrieb zum Verstellen des Handhabungsarms entlang der zweiten Bewegungsachse vorgesehen ist. Bei den beiden Antrieben handelt es sich insbesondere um Linearantriebe. Die Antriebe sind vorzugsweise grundsätzlich unabhängig voneinander ansteuerbar. Eine derartige Handhabungseinheit hat den Vorteil, dass die Ansteuerung der Bewegungsabläufe in Richtung der ersten Bewegungsachse und in Richtung der zweiten Bewegungsachse aufgrund des Vorsehens der zwei unterschiedlichen Antriebe unabhängig erfolgen kann. Insbesondere kann lediglich ein Antrieb angesteuert werden, oder es können auch beide Antriebe gleichzeitig angesteuert werden, je nachdem, welche Bogenabschnitte abgefahren werden sollen. Zudem ist möglich, dass der Handhabungsarm in jeder beliebigen Position auch angehalten werden kann.

Bei einer vorteilhaften Ausgestaltung ist vorgesehen, dass wenigstens einer der beiden Antriebe derart ansteuerbar ist, dass er den Handhabungsarm in Richtung der ihm zugehörigen Bewegungsachse bereits beaufschlagt, bevor durch den in der Kulissenführung geführten Kulissenfolger eine Bewegung des Handhabungsarm in diese Bewegungsachse möglich ist. Hierdurch kann eine Art Vorspannung realisiert werden, welche zur Folge hat, dass dann, wenn die Kulissenführung eine Bewegung in die jeweilige Bewegungsachse zulässt, diese Bewegung aufgrund der Vorspannung sehr schnell eingeleitet wird. Insgesamt kann hierdurch eine starke Beschleunigung des Kulissenfolgers in der Kulissenführung beziehungsweise des Handhabungsarms in die jeweilige Bewegungsachse erfolgen. Mit einer derartigen Handhabungseinheit können folglich erhöhte Geschwindigkeiten beim Umpositionieren von Teilen erzielt werden.

Vorzugsweise ist am Grundteil ein entlang der zweiten Bewegungsachse geführter Schlitten vorgesehen, wobei am Schlitten der Handhabungsarm entlang der ersten Bewegungsachse geführt gelagert ist.

Dabei ist denkbar, dass der erste Antrieb zwischen dem Handhabungsarm und dem Schlitten zum Bewegen des Handhabungsarms entlang der ersten Bewegungsachse und/oder das der zweite Antrieb zwischen dem Schlitten und dem Grundteil zum Bewegen des Schlittens entlang der zweiten Bewegungsachse vorgesehen ist. Aufgrund der unabhängigen Ausbildung der Antriebe können diese unabhängig voneinander jeweils an den entsprechenden Bauteilen angeordnet sein.

Als vorteilhaft hat sich herausgestellt, wenn der erste und/oder der zweite Antrieb als druckbeaufschlagbare Zylinder-Kolben-Einheiten ausgebildet sind. Derartige Antriebe beanspruchen vergleichsweise wenig Bauraum, können große Kräfte erzeugen und lassen sich zur Erzeugung einer entsprechenden Vorspannkraft entsprechend ansteuern.

Vorteilhaft ist, wenn der Kolben des ersten Antriebs fest am Handhabungsarm angeordnet ist und wenn der Zylinder des ersten Antriebs vom Schlitten gebildet wird. Entsprechend vorteilhaft ist, wenn der Kolben des zweiten Antriebs fest am Grundteil angeordnet ist und wenn der Zylinder des zweiten Antriebs vom Schlitten gebildet wird.

Eine vorteilhafte Bewegungsbahn ergibt sich dann, wenn die Führungskulisse im Wesentlichen die Form eines auf dem Kopf stehenden Us hat und einen ersten vertikalen Abschnitt, einen sich daran anschließenden ersten Bogenabschnitt, einen sich daran anschließenden horizontalen Abschnitt, einen sich daran anschließenden zweiten Bogenabschnitt und einen sich daran anschließenden zweiten vertikalen Abschnitt aufweist. Über eine derartige Kulissenform kann folglich von einer unteren hinteren Betriebslage der Handhabungsarme in eine vordere untere Betriebslage überführt werden.

Zur Hublagenerkennung des Schlittens und zur Ansteuerung des zweiten Antriebs sind vorteilhafterweise am Grundteil entsprechende Schaltelemente vorgesehen. Zudem können zur Hublagenerkennung des Handhabungsarms und zur Ansteuerung des ersten Schlittens zusätzlich auch am Schlitten entsprechende Schaltelemente vorgesehen sein. Grundsätzlich ist ausreichend, lediglich die Hublage des Schlittens zu erkennen und in Abhängigkeit der Hublage des Schlittens die beiden Antriebe anzusteuern.

Dabei ist vorteilhaft, wenn am Grundteil wenigstens drei Schaltelemente zur Erkennung von drei übereinander liegenden Hublagen des Schlittens derart vorgesehen sind, dass eine hintere untere Betriebslage erkannt werden kann und das bei Erkennen der hinteren unteren Betriebslage der zweite Antrieb zum Anheben des Schlittens angesteuert wird. Folglich wird hier ausgehend von einer hinteren unteren Ausgangslage der Schlitten angehoben.

Vor Erreichen einer oberen Betriebslage kann vorzugsweise eine Vorschublage erkannt werden, wobei bei Erkennen der Vorschublage parallel, also zusätzlich zum zweiten Antrieb, auch der erste Antrieb zum Ausfahren des Handhabungsarms angesteuert wird. Die Vorschublage ist dabei vorzugsweise derart angeordnet, dass ein Bewegen des Handhabungsarms entlang der ersten Bewegungsachse noch nicht möglich ist. Dadurch wird erreicht, dass der Handhabungsarm in Richtung der ersten Bewegungsachse mit einer Kraft vorgespannt wird, so dass dann, wenn eine Bewegung in Richtung der ersten Bewegungsachse aufgrund der Führungskulisse möglich wird, diese Bewegung in Richtung der ersten Bewegungsachse mit einer hohen Beschleunigung erfolgt.

Ferner ist vorgesehen, dass die obere Betriebslage erkannt werden kann. Bei Erkennen oder Verlassen der oberen Betriebslage wird dann der zweite Antrieb zum Absenken des Schlittens betätigt.

Ferner ist vorgesehen, dass die vordere untere Betriebslage erkannt werden kann. In dieser vorderen unteren Betriebslage kann dann das Teil beispielsweise gegriffen werden. Während des Greifvorgangs wird die vordere untere Betriebslage beibehalten. Insbesondere ist vorteilhaft, wenn nach Vorhandensein einer Bestätigungsgröße, beispielsweise das gegriffen wurde, der zweite Antrieb zum Anheben des Schlittens betätigt wird. Kurz vor, bei oder nach Erreichen der vorderen oberen Betriebslage kann dann der erste Antrieb derart betätigt werden, dass der Handhabungsarm in die hintere Betriebslage gefahren wird. Kurz vor, bei oder nach Erreichen der oberen hinteren Betriebslage kann dann der zweite Antrieb derart betätigt werden, dass der Handhabungsarm in die hintere untere Betriebslage überführt wird.

Zur Dämpfung der Bewegung des Schlittens bei Erreichen der unteren Betriebslagen können am Grundteil entsprechende Stoßdämpfer vorgesehen sein.

Vorteilhaft ist, wenn die axiale Lage der Stoßdämpfer zur Verstellung der unteren Betriebslage verstellbar ist. Über die axiale Lage der Stoßdämpfer kann folglich die vertikale Lage der unteren Betriebslage eingestellt werden.

Die eingangs genannte Aufgabe wird auch durch ein Verfahren zum Betreiben einer erfindungsgemäßen Handhabungseinheit dadurch gelöst, dass wenigstens einer der beiden Antriebe derart angesteuert wird, dass er den Handhabungsarm in Richtung der ihm zugehörigen Bewegungsachse bereits beaufschlagt, bevor durch den in der Kulissenführung geführten Kulissenfolger eine Bewegung des Handhabungsarms in diese Bewegungsachse möglich ist. Hierdurch können vergleichsweise hohe Beschleunigungen der Bewegung des Handhabungsarms erzielt werden.

Dabei ist vorteilhaft, wenn bei Erkennen der hinteren unteren Betriebslage der zweite Antrieb zum Anheben des Schlittens angesteuert wird, wenn vor Erreichen einer oberen Betriebslage eine Vorschublage erkannt wird, und bei Erkennen der Vorschublage parallel zum zweiten Antrieb auch der erste Antrieb zum Ausfahren des Handhabungsarms angesteuert wird, wenn bei Erkennen oder Verlassen einer oberen Betriebslage der zweite Antrieb zum Absenken des Schlittens umgeschaltet wird und/oder wenn bei Erkennen der vorderen unteren Betriebslage der zweite Antrieb eingeschaltet bleibt, abgeschaltet oder umgeschaltet wird.

Weitere Vorteile und vorteilhafte Ausgestaltungen der Erfindung sind der nachfolgenden Beschreibung zu entnehmen, anhand derer das in den Figuren dargestellte Ausführungsbeispiel näher beschrieben und erläutert ist.

Es zeigen:
Figur 1 eine perspektivische Ansicht einer Handhabungseinheit;
Figur 2 die Vorderansicht der Handhabungseinheit;
Figur 3 die Seitenansicht von rechts der Handhabungseinheit;
Figur 4 die Rückansicht der Handhabungseinheit;
Figur 5 die Draufsicht der Handhabungseinheit auf Figur 1 entlang des Schnitts S4- S4 aus Figur 9;
Figur 6 die Unteransicht der Handhabungseinheit;
Figur 7 den Handhabungsarm der Handhabungseinheit in Draufsicht;
Figur 8 das Grundteil der Handhabungseinheit in Vorderansicht;
Figur 9 einen Schnitt durch die Handhabungseinheit entlang der Linie S1 - S1 in Figur 2;
Figur 10 einen Schnitt durch die Handhabungseinheit entlang der Linie S2 - S2 in Figur 2;
Figur 11 einen Schnitt entlang der Linie S3 - S3 der Figur 10;
Figur 12 einen Querschnitt durch Figur 9; und
Figur 13 den Handhabungsarm einer weiteren Ausführungsform.

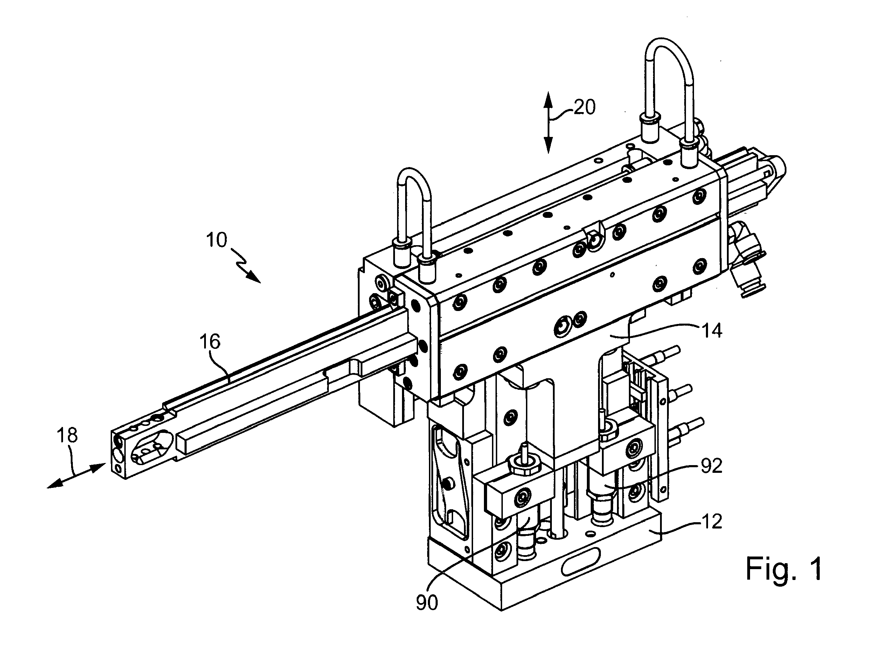

In den Figuren 1 bis 12 ist eine Handhabungseinheit 10 dargestellt, die ein Grundteil 12, einen Schlitten 14 und einen Handhabungsarm 16 umfasst. Der Handhabungsarm ist entlang einer ersten Bewegungsachse 18 in linearer Richtung verstellbar im Schlitten 14 geführt. Der Schlitten 14 ist seinerseits entlang einer zur ersten Bewegungsachse 18 quer verlaufenden zweiten Bewegungsachse 20 am Grundteil 12 verstellbar geführt.

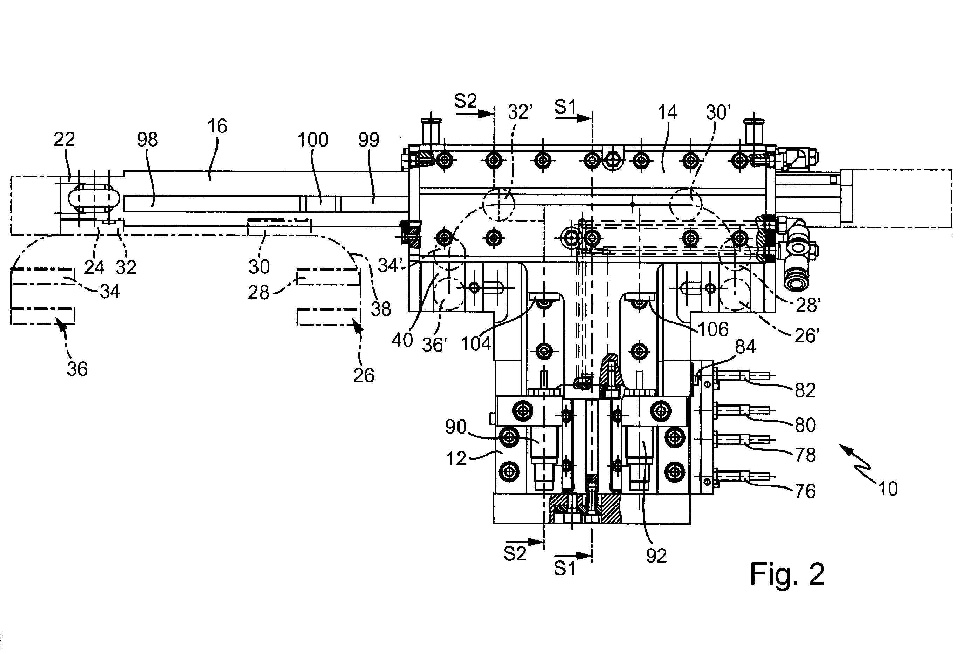

Wie aus Figur 2 deutlich wird, weist der Handhabungsarm 16 ein freies Ende 22 auf, an welchem beispielsweise eine Adapterplatte 24 anordenbar ist. Wie in Figur 2 strichpunktiert angedeutet ist, kann das freie Ende 22, beziehungsweise die Adapterplatte 24, aus einer hinteren, beziehungsweise eingefahrenen unteren Betriebslage 26, über verschiedene Bewegungspositionen 28 bis 34 in eine vordere untere Betriebslage 36 verlagert werden. Die Verlagerung erfolgt dabei entlang einer Bewegungsbahn 38.

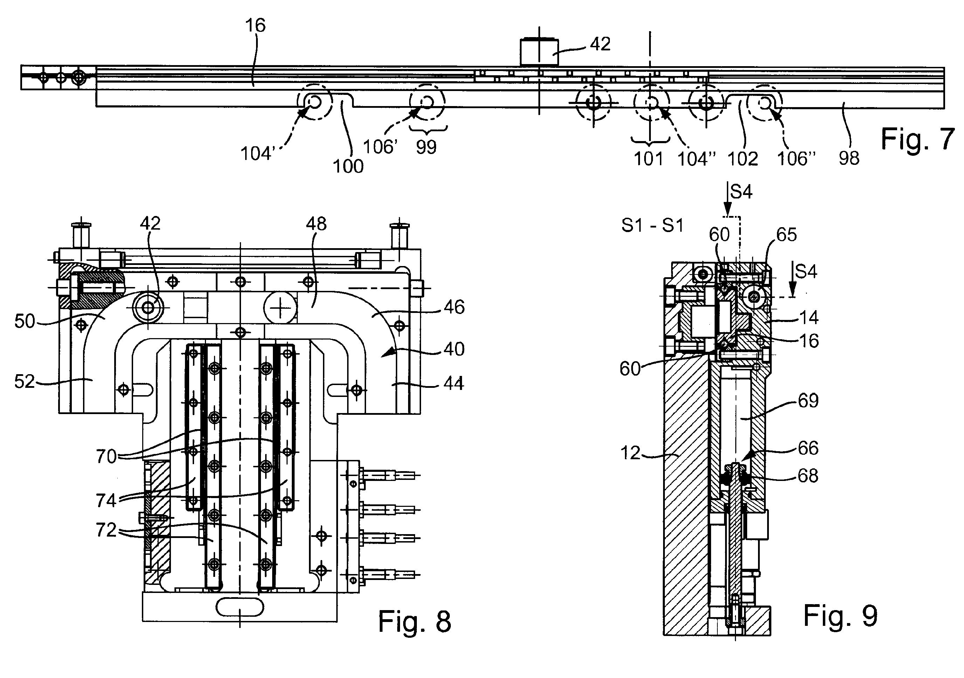

Zur Realisierung der Bewegungsbahn 38 ist am Grundteil eine Führungskulisse 40 vorgesehen, in welche ein handhabungsarmseitiger Kulissenfolger 42 eingreift. Die Kulisse 40 ist dabei insbesondere in Figur 8 deutlich zu erkennen, welche die Vorderansicht des Grundteils 12 ohne Schlitten 14 und ohne Handhabungsarm 16 zeigt. Ebenfalls in Figur 8 ist der Kulissenfolger 42 dargestellt, der, wie aus Figur 7 deutlich wird, am Handhabungsarm 16 angebracht ist. Der Kulissenfolger 42 ist dabei als drehgelagerte Kulissenrolle ausgeführt.

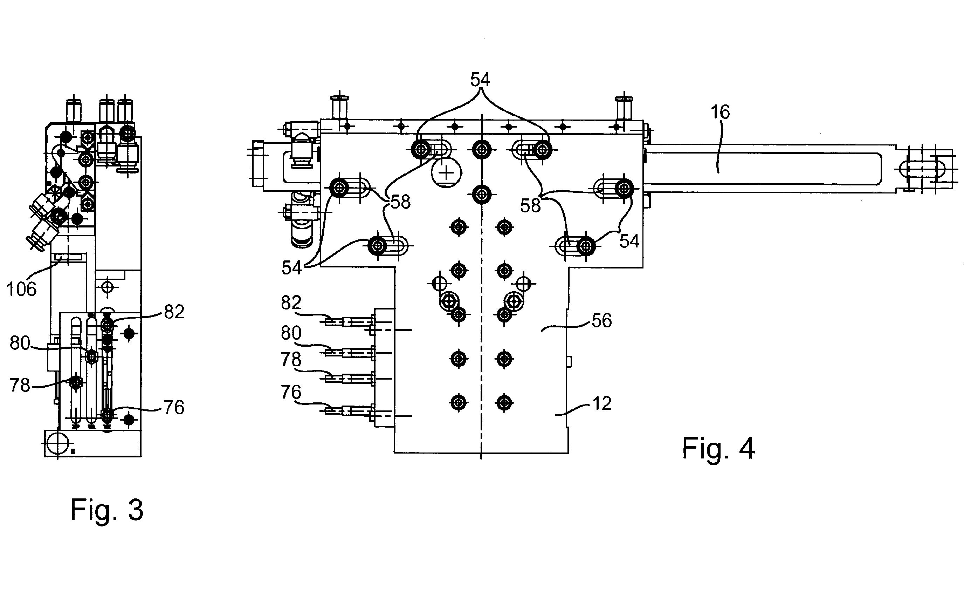

In der Figur 2 sind in den beiden gezeigten Betriebslagen 26 und 36 sowie den Bewegungspositionen 28 bis 34 des freien Endes 22 des Handhabungsarms 16 zugehörige Positionen 26' bis 36' des Kulissenfolgers 42 gezeigt. Die einem auf dem Kopf stehenden U entsprechende Kulissenbahn der Führungskulisse 40 entspricht der Bewegungsbahn 38 des freien Endes 22 des Handhabungsarms 16. Wie insbesondere aus Figur 8 deutlich wird, weist die Führungskulisse 40 ausgehend von der hinteren unteren Betriebslage des Handhabungsarms 16 einen ersten vertikalen Abschnitt 44, einen sich daran anschließenden ersten Bogenabschnitt 46, einen sich daran anschließenden horizontalen Abschnitt 48, einen sich daran anschließenden zweiten Bogenabschnitt 50 und einen sich daran anschließenden zweiten vertikalen Abschnitt 52 auf. Zur Hubverstellung des Horizontalhubes des Handhabungsarms 16 kann der horizontale Abschnitt 48 der Führungskulisse 40 verlängert werden. Dazu können an der Rückseite der Einheit 10, die in Figur 4 dargestellt ist, die dort gezeigten Schrauben 54 gelöst werden und die aus zwei Teilen bestehende Führungskulisse 40 des Grundteils 12 entlang den Langlöchern 58 aufeinander zu beziehungsweise voneinander weg verfahren und durch Anziehen der Schrauben 54 festgesetzt werden.

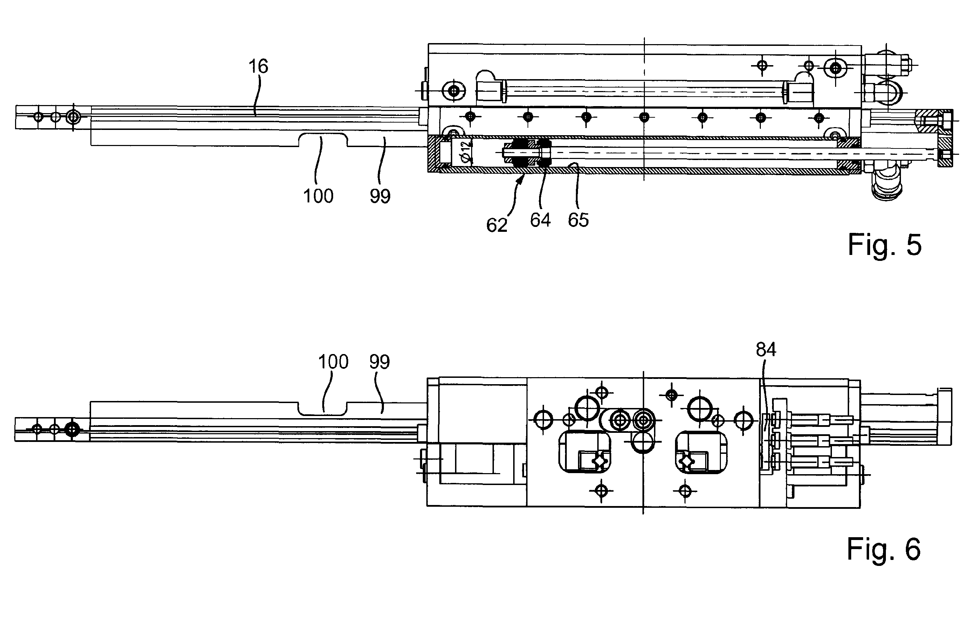

Wie im Schnitt gemäß Figur 9 deutlich wird, ist der Handhabungsarm 16 über Linearlager 60 entlang der ersten Bewegungsachse 18 am Schlitten 14 geführt gelagert. Zum Bewegen des Handhabungsarms 16 entlang der ersten Bewegungsachse 18 ist ein in Figur 5 dargestellter erster Antrieb 62 in Form einer Zylinder-Kolben-Einheit vorgesehen. Dazu ist ein fest am Handhabungsarm 16 angeordneter Kolben 64 vorgesehen, der sich in einem schlittenseitigen Zylinder 65 befindet. Der Kolben 64 ist beidseitig druckbeaufschlagbar. Je nach Druckbeaufschlagung der Druckräume kann der Kolben 64 entlang der ersten Bewegungsachse 18 zusammen mit dem Handhabungsarm 16 verfahren werden.

Zum Verstellen des Schlittens 14 gegenüber dem Grundteil 12 ist, wie insbesondere aus Figur 9 deutlich wird, ein zweiter Antrieb 66 vorgesehen, der ebenfalls als Zylinder-Kolben-Einheit ausgebildet ist. Der Antrieb 66 umfasst einen fest am Grundteil 12 angeordneten Kolben 68, der in einem vom Schlitten 14 gebildeten Zylinder 69 untergebracht ist. Der Kolben 68 begrenzt zwei Druckräume. Je nach Druckbeaufschlagung der Druckräume kann der Schlitten 14 gegenüber dem Grundteil 12 in Richtung der zweiten Bewegungsachse 20 verfahren werden.

Die beiden Antriebe 62 und 66 sind unabhängig voneinander ansteuerbar.

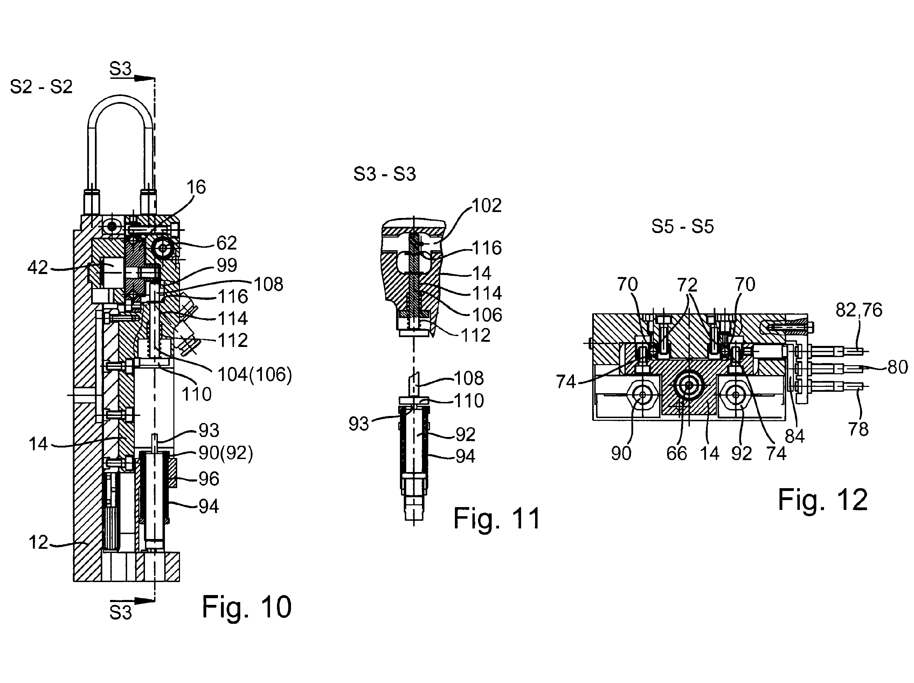

Wie aus den Figuren 8 und 12 deutlich wird, ist der Schlitten 14 über Linearlager 70 am Grundteil 12 geführt gelagert. Wie aus Figur 8 deutlich wird, sind dazu am Grundteil 12 Führungsschienen 72 befestigt, welche mit schlittenseitigen Führungsschienen 74 über beispielsweise Wälzkörper korrespondieren.

Zur gezielten Ansteuerung der beiden Antriebe 62 und 66 sind am Grundteil 12 insgesamt vier Näherungsschalter 76, 78, 80 und 82 vorgesehen, die beispielsweise in Figuren 2, 3, 4 und 6 deutlich zu erkennen sind. Am Schlitten 14 ist ein Schaltelement 84 angeordnet, das insbesondere in den Figuren 6 und 12 gut zu erkennen ist. Je nach vertikaler Lage des Schlittens ändert das Schaltelement 84 seine vertikale Position.

In der hinteren unteren Betriebslage 26 des Handhabungsarms 16, wie sie in der Figur 2 dargestellt ist, korrespondiert das Schaltelement 84 mit dem untersten Näherungsschalter 76, der ebenfalls in Figur 2 oder Figur 3 deutlich zu erkennen ist. Im Betrieb der Einheit 10 wird aufgrund dieser erkannten hinteren unteren Betriebslage, aufgrund des Schaltens des Näherungsschalters 76, der zweite Antrieb 66 zum Anheben des Schlittens 14 angesteuert. Der Schlitten 14 wird folglich angehoben. Bei Erreichen der in Figur 2 angedeuteten Bewegungsposition 28 beziehungsweise 28' wird der Näherungsschalter 80 vom Schaltelement 84 betätigt. In dieser Vorschublage wird dann zusätzlich zum zweiten Antrieb 66 auch der erste Antrieb 62 derart angesteuert, dass der Handhabungsarm 16 in die ausgefahrene Position beaufschlagt wird. Aufgrund der Kulissenbahn kann in der Position 28 beziehungsweise 28' der Handhabungsarm noch nicht entlang der ersten Bewegungsachse 18 nach vorne bewegt werden. Aufgrund des Ansteuerns des ersten Antriebs 62 erfolgt eine Vorspannung des Handhabungsarms 16 in der ersten Bewegungsachse nach vorne. Bei weiterem Anheben des Schlittens 14 kann dann der Handhabungsarm 16 aufgrund der Vorspannung des Antriebs 62 mit sehr hoher Beschleunigung in die ausgefahrene Position bewegt werden.

Hat der Handhabungsarm 16 seine obere Hubendlage 30 erreicht, so korrespondiert das Schaltelement 84 mit dem Näherungsschalter 82. Nach Erreichen der Position 32 beziehungsweise 32' verlässt das Schaltelement 84 den Näherungsschalter 82. Aufgrund des Ausschaltens des Näherungsschalters 82 wird der zweite Antrieb 66 umgeschaltet, so dass der Schlitten 14 nach unten bewegt wird. Erreicht das Schaltelement 84 den Näherungsschalter 78, so ist die vordere untere Betriebslage 36 beziehungsweise 36' erreicht. Ein beispielsweise an einer Platte 24 angeordneter Greifer kann dann ein Teil greifen. Nach erfolgreichem Greifen kann durch entsprechende Ansteuerung der Antriebe 62 und 66 das freie Ende des Handhabungsarms 16 aus seiner vorderen unteren Betriebslage 36 in seine hintere untere Betriebslage 26 überführt werden.

Dadurch, dass der erste Antrieb 62 bereits in der Position 28' angesteuert wird, in welcher eine Bewegung des Handhabungsarms 16 in Richtung der ersten Bewegungsachse 18 noch nicht möglich ist, können sehr hohe Taktzeiten realisiert werden.

Bei einer Weiterbildung der Erfindung, die in den Figuren nicht dargestellt ist, können auch am Schlitten 14 Schaltelemente vorgesehen sein, mit welchen charakteristische Positionen des Handhabungsarms entlang der ersten Bewegungsachse 18 abgefragt werden können.

Zur Dämpfung der Bewegung des Schlittens 14 in den beiden unteren Betriebslagen 26 und 36 sind am Grundteil zwei unabhängig voneinander in Richtung der zweiten Bewegungsachse 20 verstellbare Anschlagelemente 90 und 92 in Form von Stoßdämpfern vorgesehen. Wie insbesondere aus Figur 10 deutlich wird, weisen die beiden Anschlagelemente 90, 92 eine Gewindehülse 94 auf, welche jeweils in eine grundteilseitige Gewindebohrung 96 eingeschraubt sind. Je nach Einschraubtiefe ist eine unterschiedliche axiale Einstellung möglich. Die beiden Anschlagelemente 90 und 92 weisen jeweils ein Anschlagglied 93 auf, welches gedämpft in Richtung der zweiten Bewegungsachse 20 gegenüber der Gewindehülse 94 verlagerbar ist. Über das eine Anschlagelement 90 ist die Höhe der vorderen unteren Betriebslage einstellbar. Über das andere Einstellelement 92 ist die Höhe der hinteren unteren Betriebslage einstellbar.

Wie aus insbesondere der Figur 7 deutlich wird, weist der Handhabungsarm 16 einen sich entlang seiner Längsachse erstreckenden seitlichen Steg 98 auf. Der Steg 98 bildet zwei Anschlagabschnitte 99 und 101 und weist zudem zwei Aussparungsabschnitte 100 und 102 auf. Aus insbesondere Fig. 7 wird deutlich, dass der Aussparungsabschnitt 100 zwischen dem freien Ende 22 des Handhabungsarms 16 und dem Anschlagabschnitte 99 liegt. Denkbar wäre, dass der Handhabungsarm nur eine solche Länge aufweist, dass der dem freien Ende 22 abgewandte Aussparungsabschnitt 102

Im Schlitten 14 sind zwei Zwischenglieder 104 und 106 vorgesehen, wobei das eine Zwischenglied 104 mit dem Anschlag 90 und das andere Zwischenglied 106 mit dem Anschlag 92 zusammenwirkt. Wie aus den Figuren 10 und 11 deutlich wird, sind die Zwischenglieder 104 und 106 kolbenartig ausgebildet und weisen eine Stange 108 und eine Platte 110 auf. Das freie Ende der Stange 108 ist dazu vorgesehen, gegen den Anschlagabschnitt 101 des Stegs 98 des Handhabungsarms 16 zu wirken. Die beiden Aussparungsabschnitte 100 und 102 sind so gewählt, dass in der vorderen unteren Betriebslage der hintere Aussparungsabschnitt 102 mit dem hinteren Zwischenglied 106 zusammenwirkt und dass in der hinteren unteren Betriebslage 26 der vordere Aussparungsabschnitt 100 mit dem vorderen Zwischenglied 104 zusammenwirkt. In der vorderen unteren Betriebslage 36 wirkt folglich, wie auch aus der Figur 10 entnehmbar ist, der Anschlagabschnitt 99 des Stegs 98 mit dem freien Ende der Stange 108 des Zwischenstücks 104 zusammen. Die Platte 110 des Zwischenglieds 104 trifft dann in der vorderen unteren Betriebslage auf das Aufschlagglied 93 des Anschlagelements 90.

Wie bereits ausgeführt, korrespondiert in der vorderen unteren Betriebslage 36 die Aussparung 102 mit dem anderen Zwischenglied 106, so dass das freie Ende der Stange 108 des Zwischenglieds 106 nicht vom Handhabungsarm 16 beaufschlagt wird. Wie in Figur 11 dargestellt, taucht dann das Zwischenglied 106 in der vorderen unteren Betriebslage 36 in den Schlitten 14 ein und bietet keinen nennenswerten Widerstand und damit auch keinen Anschlag bei Erreichen der vorderen unteren Betriebslage 36. Als Anschlag in Richtung der zweiten Bewegungsachse 20 in der vorderen unteren Betriebslage ist folglich ausschließlich das Anschlagelement 90 verantwortlich, welches mit dem Anschlagabschnitt 101 zusammenwirkt.

In der hinteren unteren Betriebslage 26 verhält es sich genau anders herum. In dieser Betriebslage 26 korrespondiert das vordere Anschlagelement 90 mit dem zugehörigen Zwischenglied 104 so, dass das Zwischenglied 104 mit dem Aussparungsabschnitt 102 zusammenwirkt. Bei Auftreffen des Zwischenglieds 104 auf das zugehörige Anschlagelement 90 taucht das Zwischenglied 104 folglich in axialer Richtung nach oben in den Schlitten 14 ein und bietet keinen nennenswerten Widerschlag und auch keinen Anschlag. In der Betriebslage 26 korrespondiert das hintere Zwischenglied 106 mit dem Anschlagabschnitt 99 des Stegs 98 des Handhabungsarms 16. Insofern kann das Zwischenglied 106 nicht in axialer Lage in den Schlitten 14 eintauchen. Es schlägt folglich bei Erreichen der Betriebslage 26 auf das Aufschlagglied 93 des hinteren Anschlagelements 92. Die Höhe der hinteren unteren Betriebslage 26 wird folglich ausschließlich durch die Einschraubtiefe des hinteren Anschlagelements 92 im Grundteil 12 vorgegeben.

In der Figur 7 sind die beiden Zwischenglieder 104 und 106 zum einen in der hinteren Betriebslage als 104' und 106' dargestellt sowie in der vorderen Betriebslage als 104" und 106''

Deutlich zu erkennen ist, wie in der hinteren Betriebslage das Zwischenglied 104' in die Aussparung 100 eingreift und das Zwischenglied 106' gegen den Anschlagabschnitt 99 wirkt. Ferner ist deutlich erkennbar, wie in der vorderen Betriebslage das Zwischenglied 104" gegen den Anschlagabschnitt 101 des Handhabungsarms 16 wirkt und das Zwischenglied 106" in dem Aussparungsabschnitt 102 eingreift. Dann, wenn die Zwischenglieder 104 beziehungsweise 106 in einem zugehörigen Aussparungsabschnitt 100 beziehungsweise 102 eingreifen, wirken diese Zwischenglieder nicht als Anschlag. Die Zwischenglieder tauchen vielmehr in der jeweiligen Betriebslage in den zugehörigen Aussparungsabschnitt.

Wie insbesondere aus Figur 10 deutlich wird, durchgreifen die Stangen 108 der Zwischenglieder 104 und 106 im Schlitten 14 vorgesehene Durchgangsbohrungen 114. Ferner weisen die Zwischenglieder 104 und 106 im Bereich ihres freien Endes zur Verliersicherung Sicherungsscheiben 116 auf.

Um eine definierte Lage der beiden Zwischenglieder 104 und 106 zu gewährleisten, sind diese mittels Schraubenfedern 112 in ihrer axial unteren Lage vorgespannt gehalten.

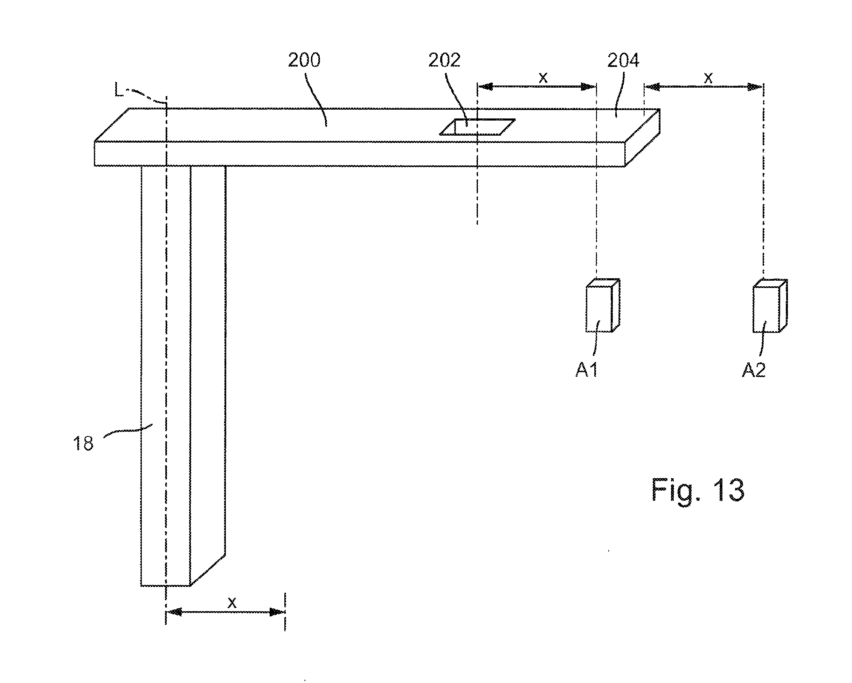

In der Fig. 13 ist der Handhabungsarm 16 einer Ausführungsform gezeigt, wie sie in der DE 200 04 746 U1 beschrieben ist. Am Handhabungsarm 16 ist ein Querträger 200 vorgesehen, entsprechend dem Querträger 59 aus der DE 200 04 746 U1. Der Querträger 200 weist einen Aussparungsabschnitt 202 und einen Anschlagabschnitt 204 auf, wobei der Aussparungsabschnitt 202 zwischen der Längsachse L des Handhabungsarms 16 und dem Anschlagabschnitt 204 am Querträger 200 angeordnet ist. In der Fig. 13 ist die vordere obere Zwischenposition gezeigt. Der Handhabungsarm 16 ist um den Hub x in horizontaler Richtung in die hintere Lage verlagerbar. In der vorderen unteren Betriebslage wirkt das Anschlagelement A1 gegen den Anschlagabschnitt 204 und das Anschlagelement A2 greift aufgrund entsprechend gewählter Länge des Querträgers 200 ins Leere. In der hinteren unteren Betriebslage taucht das Anschlagelement A1 in den Aussparungsabschnitt 202 und das Anschlagelement A2 wirkt gegen den Anschlagabschnitt 204. Beide Anschlagelemente A1 und A2 sind unabhängig voneinander höhenverstellbar, so dass die Hubendlagen des Handhabungsarms 16 höhenverstellbar sind.

## Patentansprüche

1. Handhabungseinheit (10) zum Umpositionieren von Teilen mit Grundteil (12) und einem Handhabungsarm (16), wobei der Handhabungsarm (16) entlang einer ersten Bewegungsachse (18) in linearer Richtung und entlang einer zur ersten Bewegungsachse (18) quer verlaufenden zweiten Bewegungsachse (20) gegenüber dem Grundteil (12) verstellbar geführt ist, wobei ein erster Antrieb (62) zum Verstellen des Handhabungsarms (16) entlang der ersten Bewegungsachse (18) und ein zweiter Antrieb (66) zum Verstellen des Handhabungsarms (16) entlang der zweiten Bewegungsachse (20) vorgesehen ist, wobei zur Führung des Handhabungsarms (16) am Grundteil (12) eine Führungskulisse (40) und am Handhabungsarm (16) wenigstens ein Kulissenfolger (42) vorgesehen sind, **dadurch gekennzeichnet, dass** am Grundteil (12) ein entlang der zweiten Bewegungsachse (20) geführter Schlitten (14) vorgesehen ist und dass am Schlitten (14) der Handhabungsarm (16) entlang der ersten Bewegungsachse (18) geführt gelagert ist.

2. Handhabungseinheit (10) nach Anspruch 1, **dadurch gekennzeichnet, dass** wenigstens einer der beiden Antriebe (66) derart ausgebildet ist, dass er so ansteuerbar ist, dass er den Handhabungsarm (16) in Richtung der ihm zugehörigen Bewegungsachse (18, 20) bereits beaufschlagt, bevor durch den in der Führungskulisse (40) geführten Kulissenfolger (42) eine Bewegung des Handhabungsarms (16) in diese Bewegungsachse (18, 20) möglich ist.

3. Handhabungseinheit (10) nach Anspruch 1 oder 2, **dadurch gekennzeichnet, dass** der erste Antrieb (62) zwischen Handhabungsarm (16) und Schlitten (14) zum Bewegen des Handhabungsarms (16) entlang der ersten Bewegungsachse (18) und/oder der zweite Antrieb (66) zwischen Schlitten (14) und Grundteil (12) zum Bewegen des Schlittens (14) entlang der zweiten Bewegungsachse (20) vorgesehen ist.

4. Handhabungseinheit (10) nach einem der vorhergehenden Ansprüche, **dadurch gekennzeichnet, dass** der erste und/oder der zweite Antrieb (62, 66) als druckbeaufschlagbare Zylinder-Kolben-Einheit ausgebildet ist.

5. Handhabungseinheit (10) nach Anspruch 4, **dadurch gekennzeichnet, dass** der Kolben (64) des ersten Antriebs (62) fest am Handhabungsarm (16) angeordnet ist und dass der Zylinder (65) des ersten Antriebs (62) vom Schlitten (14) gebildet wird.

6. Handhabungseinheit (10) nach Anspruch 4 oder 5, **dadurch gekennzeichnet, dass** der Kolben (68) des zweiten Antriebs (66) fest am Grundteil (12) angeordnet ist und dass der Zylinder (69) des zweiten Antriebs (66) vom Schlitten (14) gebildet wird.

7. Handhabungseinheit (10) nach einem der vorhergehenden Ansprüche, **dadurch gekennzeichnet, dass** die Führungskulisse (40) einen ersten vertikalen Abschnitt (44), einen sich daran anschließenden ersten Bogenabschnitt (46), einen sich daran anschließenden horizontalen Abschnitt (48), einen sich daran anschließenden zweiten Bogenabschnitt (50) und einen sich daran anschließenden zweiten vertikalen Abschnitt (52) aufweist.

8. Handhabungseinheit (10) nach einem der vorhergehenden Ansprüche, **dadurch gekennzeichnet, dass** zur Hublagenerkennung des Schlittens (14) und zur Ansteuerung des zweiten Antriebs (66) am Grundteil (12) Schalter (76, 78, 80, 82) vorgesehen sind und/oder dass zur Hublagenerkennung des Handhabungsarms (16) und zur Ansteuerung des ersten Antriebs (62) am Schlitten (14) Schalter vorgesehen sind.

9. Handhabungseinheit (10) nach Anspruch 8, **dadurch gekennzeichnet, dass** am Grundteil (12) wenigstens drei Schalter (76, 78, 80, 82) zur Erkennung von drei übereinander liegenden Hublagen des Schlittens (14) derart vorgesehen sind, dass
(a) eine hintere untere Betriebslage (26) erkannt werden kann und dass bei Erkennen der hinteren unteren Betriebslage (26) der zweite Antrieb (66) zum Anheben des Schlittens (14) angesteuert wird, und/oder
(b) vor Erreichen einer oberen Betriebslage (30) eine Vorschublage (28) erkannt werden kann und dass bei Erkennen der Vorschublage (28) parallel zum zweiten Antrieb (66) auch der erste Antrieb (62) zum Ausfahren des Handhabungsarms (16) angesteuert wird, und/oder
(c) eine obere Betriebslage (30) erkannt werden kann und dass bei Erkennen oder Verlassen der oberen Betriebslage (30) der zweite Antrieb (66) zum Absenken des Schlittens umgeschaltet wird, und/oder
(d) eine vordere untere Betriebslage (36) erkannt werden kann.

10. Handhabungseinheit (10) nach Anspruch 9, **dadurch gekennzeichnet, dass** bei Erkennen der vorderen unteren Betriebslage (36) nach Vorhandensein einer Bestätigungsgröße der zweite Antrieb (66) zum Anheben des Schlittens umgeschaltet wird.

11. Handhabungseinheit (10) nach einem der vorhergehenden Ansprüche, **dadurch gekennzeichnet, dass** am Grundteil Stoßdämpfer (90, 92) zur Dämpfung der Bewegung des Schlittens bei Erreichen der unteren Betriebslagen (26, 36) vorgesehen sind.

12. Handhabungseinheit (10)nach Anspruch 11, **dadurch gekennzeichnet, dass** die vertikale Lage der Stoßdämpfer (90, 92) zur Verstellung der unteren Betriebslage verstellbar ist.

13. Verfahren zum Betreiben einer Handhabungseinheit (10) nach einem der vorherigen Ansprüche, **dadurch gekennzeichnet, dass** wenigstens einer der beiden Antriebe (62, 66) derart angesteuert wird, dass er den Handhabungsarm (16) in Richtung der ihm zugehörigen Bewegungsachse(18, 20) bereits beaufschlagt, bevor durch den in der Kulissenführung (40) geführten Kulissenfolger (42) eine Bewegung des Handhabungsarms (16) in diese Bewegungsachse (18, 20) möglich ist.

14. Verfahren nach Anspruch 13, **dadurch gekennzeichnet, dass**
(a) eine hintere untere Betriebslage (26) erkannt wird und dass bei Erkennen der hinteren unteren Betriebslage (26) der zweite Antrieb (66) zum Anheben des Schlittens angesteuert wird, und/oder
(b) vor Erreichen einer oberen Betriebslage (30) eine Vorschublage (28) erkannt wird und dass bei Erkennen der Vorschublage (28) parallel zum zweiten Antrieb (66) auch der erste Antrieb (62) zum Ausfahren Handhabungsarms (16) angesteuert wird, und/oder
(c) eine obere Betriebslage (30) erkannt wird und dass bei Erkennen oder Verlassen der oberen Betriebslage (30) der zweite Antrieb (66) zum Absenken des Schlittens (14) umgeschaltet wird, und/oder
(d) eine ausgefahrene untere Betriebslage (36) erkannt wird und dass bei Erkennen der vorderen unteren Betriebslage (36) der zweite Antrieb (66) eingeschaltet bleibt, abgeschaltet oder umgeschaltet wird.

## Claims

1. Handling unit (10) for repositioning parts comprising a base part (12) and a handling arm (16), wherein the handling arm (16) is guided adjustably in relation to the base part (12) along a first axis of movement (18), in a linear direction, and along a second axis of movement (20) running transversely to the first axis of movement (18), wherein a first drive (62) is provided in order to adjust the handling arm (16) along the first axis of movement (18) and a second drive (66) is provided in order to adjust the handling arm (16) along the second axis of movement (20), wherein, in order to guide the handling arm (16), a guide track (40) is provided on the base part (12) and at least one track follower (42) is provided on the handling arm (16), **characterised in that** a carriage (14), guided along the second axis of movement (20), is provided on the base part (12) and that the handling arm (16) is mounted on the carriage (14) so as to be guided along the first axis of movement (18).

2. Handling unit (10) according to claim 1, **characterised in that** at least one of the two drives (66) is so designed that it can be actuated in such a way that it already loads the handling arm (16) in the direction of the axis of movement (18, 20) assigned to it before the track follower (42) guided in the guide track (40) permits the handling arm (16) to move in this axis of movement (18, 20).

3. Handling unit (10) according to claim 1 or 2, **characterised in that** the first drive (62) is provided between the handling arm (16) and carriage (14) in order to move the handling arm (16) along the first axis of movement (18) and/or the second drive (66) is provided between the carriage (14) and base part (12) in order to move the carriage (14) along the second axis of movement (20).

4. Handling unit (10) according to one of the preceding claims, **characterised in that** the first and/or the second drive (62, 66) is designed as a pressure-loadable cylinder-piston unit.

5. Handling unit (10) according to claim 4, **characterised in that** the piston (64) of the first drive (62) is fixed to the handling arm (16) and that the cylinder (65) of the first drive (62) is formed by the carriage (14).

6. Handling unit (10) according to claim 4 or 5, **characterised in that** the piston (68) of the second drive (66) is fixed to the base part (12) and that the cylinder (69) of the second drive (66) is formed by the carriage (14).

7. Handling unit (10) according to one of the preceding claims, **characterised in that** the guide track (40) possesses a first vertical section (44), an adjoining first curved section (46), an adjoining horizontal section (48), an adjoining second curved section (50) and an adjoining second vertical section (52).

8. Handling unit (10) according to one of the preceding claims, **characterised in that** switches (76, 78, 80, 82) are provided on the base part (12) in order to detect the stroke position of the carriage (14) and to actuate the second drive (66) and/or that switches are provided on the carriage (14) in order to detect the stroke position of the handling arm (16) and to actuate the first drive (62).

9. Handling unit (10) according to claim 8, **characterised in that** at least three switches (76, 78, 80, 82) are provided on the base part (12) in order to detect three stroke positions of the carriage (14), located above one another, such that
(a) a rear lower operating position (26) can be detected and that, on detection of the rear lower operating position (26), the second drive (66) is actuated in order to raise the carriage (14), and/or,
(b) before an upper operating position (30) is reached, a feed position (28) can be detected, and that on detection of the feed position (28) the first drive (62) is also actuated, in parallel with the second drive (66), in order to extend the handling arm (16), and/or
(c) an upper operating position (30) can be detected and that, on detection of or departure from the upper operating position (30), the second drive (66) is switched over in order to lower the carriage, and/or
(d) a front lower operating position (36) can be detected.

10. Handling unit (10) according to claim 9, **characterised in that** on detection of the front lower operating position (36), after a confirmation value is attained, the second drive (66) is switched over in order to raise the carriage.

11. Handling unit (10) according to one of the preceding claims, **characterised in that** shock absorbers (90, 92) are arranged on the base part in order to damp the movement of the carriage when the lower operating position (26, 36) is reached.

12. Handling unit (10) according to claim 11, **characterised in that** the vertical position of the shock absorbers (90, 92) is adjustable in order to adjust the lower operating position.

13. Method for operating a handling unit (10) according to one of the preceding claims, **characterised in that** at least one of the two drives (62, 66) is actuated in such a way that way that it already loads the handling arm (16) in the direction of the axis of movement (18, 20) assigned to it before the track follower (42) guided in the guide track (40) permits the handling arm (16) to move in this axis of movement (18, 20).

14. Method according to claim 13, **characterised in that**
(a) a rear lower operating position (26) is detected and that, on detection of the rear lower operating position (26), the second drive (66) is actuated in order to raise the carriage, and/or
(b) before an upper operating position (30) is reached, a feed position (28) is detected, and that on detection of the feed position (28) the first drive (62) is also actuated, in parallel with the second drive (66), in order to extend the handling arm (16), and/or
(c) an upper operating position (30) is detected and that, on detection of or departure from the upper operating position (30), the second drive (66) is switched over in order to lower the carriage (14), and/or
(d) an extended lower operating position (36) is detected and that, on detection of the front lower operating position (36), the second drive (66) remains switched on, is switched off or is switched over.

## Revendications

1. Unité de manutention (10) destinée à repositionner des éléments comprenant une partie de base (12) et un bras de manutention (16), dans laquelle le bras de manutention (16) est guidé de façon réglable par rapport à la partie de base (12) le long d'un premier axe de mouvement (18) dans le sens linéaire et le long d'un deuxième axe de mouvement (20) s'étendant transversalement au premier axe de mouvement (18), une première commande (62) étant prévue pour déplacer le bras de manutention (16) le long du premier axe de mouvement (18) et une deuxième commande (66) étant prévue pour déplacer le bras de manutention (16) le long du deuxième axe de mouvement (20), dans laquelle il est prévu sur la partie de base (12), pour guider le bras de manutention (16), une coulisse de guidage (40) et, sur le bras de manutention (16), au moins un galet suiveur (42), **caractérisée en ce qu'**il est prévu sur la partie de base (12) un chariot (14) guidé le long du deuxième axe de mouvement (20), et **en ce que** sur le chariot (14) est monté le bras de manutention (16) guidé le long du premier axe de mouvement (18).

2. Unité de manutention (10) selon la revendication 1, **caractérisée en ce qu'**au moins l'une des deux commandes (66) est réalisée de façon à pouvoir être déclenchée de manière à solliciter le bras de manutention (16) dans le sens de l'axe de mouvement (18, 20) qui lui est associé avant qu'un mouvement du bras de manutention (16) dans cet axe de mouvement (18, 20) soit possible par le galet suiveur (42) guidé dans la coulisse de guidage (40).

3. Unité de manutention (10) selon la revendication 1 ou 2, **caractérisée en ce que** la première commande (62) est prévue entre le bras de manutention (16) et le chariot (14) pour déplacer le bras de manutention (16) le long du premier axe de mouvement (18) et/ou **en ce que** la deuxième commande (66) est prévue entre le chariot (14) et la partie de base (12) pour déplacer le chariot (14) le long du deuxième axe de mouvement (20).

4. Unité de manutention (10) selon l'une des revendications précédentes, **caractérisée en ce que** la première et/ou la deuxième commande (62, 66) est réalisée sous la forme d'une unité cylindre-piston pouvant être sollicitée en pression.

5. Unité de manutention (10) selon la revendication 4, **caractérisée en ce que** le piston (64) de la première commande (62) est agencé fixement sur le bras de manutention (16) et **en ce que** le cylindre (65) de la première commande (62) est formé par le chariot (14).

6. Unité de manutention (10) selon la revendication 4 ou 5, **caractérisée en ce que** le piston (68) de la deuxième commande (66) est agencé fixement sur la partie de base (12) et **en ce que** le cylindre (69) de la deuxième commande (66) est formé par le chariot (14).

7. Unité de manutention (10) selon l'une des revendications précédentes, **caractérisée en ce que** la coulisse de guidage (40) présente une première section verticale (44), suivie d'une première section cintrée (46), suivie d'une section horizontale (48), suivie elle-même d'une deuxième section cintrée (50), suivie elle-même d'une deuxième section verticale (52).

8. Unité de manutention (10) selon l'une des revendications précédentes, **caractérisée en ce qu'**il est prévu sur la partie de base (12) des commutateurs (76, 78, 80, 82) pour détecter la position de course du chariot (14) et pour commander la deuxième commande (66) et/ou **en ce qu'**il est prévu sur le chariot (14) des commutateurs pour détecter la position de course du bras de manutention (16) et pour commander la première commande (62).

9. Unité de manutention (10) selon la revendication 8, **caractérisée en ce qu'**il est prévu sur la partie de base (12) au moins trois commutateurs (76, 78, 80, 82) pour détecter trois positions de course du chariot (14), le fonctionnement étant le suivant :
(a) une position de fonctionnement arrière inférieure (26) peut être détectée et, lorsque cette position arrière inférieure (26) est détectée, la deuxième commande (66) est commandée pour soulever le chariot (14), et/ou
(b) avant d'atteindre une position supérieure (30) une position d'avance (28) peut être détectée et, lorsque cette position d'avance (28) est détectée, la première commande (62) est commandée parallèlement à la deuxième commande (66) pour déplacer le bras de manutention (16), et/ou
(c) une position de fonctionnement supérieure (30) peut être détectée et, lorsque cette position supérieure (30) est détectée ou quittée, la deuxième commande (66) est actionnée pour abaisser le chariot, et/ou
(d) une position inférieure avant (36) peut être détectée.

10. Unité de manutention (10) selon la revendication 9, **caractérisée en ce que**, lorsque la position de fonctionnement avant inférieure (36) est détectée en présence d'une valeur d'actionnement, la deuxième commande (66) est commutée pour soulever le chariot.

11. Unité de manutention (10) selon l'une des revendications précédentes, **caractérisée en ce qu'**il est prévu sur la partie de base des amortisseurs de chocs (90, 92) pour amortir le mouvement du chariot lorsque ce dernier atteint la position de fonctionnement inférieure (26, 36).

12. Unité de manutention (10) selon la revendication 11, **caractérisée en ce que** la position verticale des amortisseurs de chocs (90, 92) peut être réglée pour ajuster la position de fonctionnement inférieure.

13. Procédé pour faire fonctionner une unité de manutention (10) selon l'une des revendications précédentes, **caractérisé en ce qu'**au moins l'une des deux commandes (62, 66) est commandée de façon à solliciter le bras de manutention (16) dans le sens de l'axe de mouvement (18, 20) qui lui est associé, avant qu'un mouvement du bras de manutention (16) dans cet axe de mouvement (18, 20) soit possible par le piston suiveur (42) guidé dans le guidage à coulisse (40).

14. Procédé selon la revendication 13, **caractérisé en ce que** :
(a) une position de fonctionnement arrière inférieure (26) est détectée et, lorsque cette position de fonctionnement arrière inférieure (26) est détectée, la deuxième commande (66) est commandée pour soulever le chariot, et/ou
(b) avant d'atteindre une position supérieure (30), une position d'avance (28) est détectée et, lorsque cette position d'avance (28) est détectée, la première commande (62) est commandée parallèlement à la deuxième commande (66) pour déplacer le bras de manutention (16), et/ou
(c) une position de fonctionnement supérieure (30) est détectée et, lorsque cette position supérieure (30) est détectée ou quittée, la deuxième commande (66) est commandée pour abaisser le chariot (14), et/ou
(d) une position inférieure avant (36) est détectée et, lorsque cette position de fonctionnement avant inférieure (36) est détectée, la deuxième commande (66) reste enclenchée, est déconnectée ou est commutée.
